# EUROPEAN PATENT SPECIFICATION

(11) **EP 2 715 904 B1**
(45) Date of publication and mention of the grant of the patent: **29.06.2016**
(21) Application number: 12788979.8
(22) Date of filing: 24.05.2012
(51) Int. Cl.: H02J 3/36, H02J 3/38

(54) **SYSTEM AND METHOD FOR INTEGRATING AND MANAGING DEMAND/RESPONSE BETWEEN ALTERNATIVE ENERGY SOURCES, GRID POWER, AND LOADS**
SYSTEM UND VERFAHREN FÜR DIE INTEGRATION UND VERWALTUNG VON NACHFRAGEN/REAKTIONEN ZWISCHEN ALTERNATIVEN ENERGIEQUELLEN, NETZLEISTUNGEN UND LASTEN
SYSTÈME ET PROCÉDÉ POUR INTÉGRER ET GÉRER UNE DEMANDE/RÉPONSE ENTRE DES SOURCES D'ÉNERGIE ALTERNATIVE, UN RÉSEAU ÉLECTRIQUE ET DES CHARGES

(30) Priority: 24.05.2011 US 201161489263 P
(43) Date of publication of application: 09.04.2014
(73) Proprietor: Cameron, D. Kevin, Sunnyvale, California 94086 (US)
(72) Inventor: Cameron, D. Kevin, Sunnyvale, California 94086 (US)
(74) Representative: Derry, Paul Stefan
(86) International application number: PCT/US2012/039480
(87) International publication number: WO 2012/162570

(56) References cited:
- WO-A1-2010/018264
- WO-A1-2011/027195
- WO-A2-2011/023678
- WO-A2-2011/098873
- JP-A- 7 159 592
- RU-A- 2002 135 603
- US-A1- 2011 068 624

## Description

### FIELD OF TECHNOLOGY

This disclosure relates generally to the technical field of power management of alternative energy sources, and in one embodiment, this disclosure relates to a method, apparatus and system of integrating and managing multiple alternative energy sources onto a common bus.

### BACKGROUND

Power-generators ("PG") can be categorized as either alternative energy or controlled energy sources. Alternative energy sources, such as solar, wind, and wave, are referred to as uncontrolled-energy power-generators ("UEPGs") because the energy sources are subject to the whim of nature, and are thus uncontrolled. In contrast, power generation from controlled-energy power-generators ("CEPGs") can be controlled by adjusting the raw material input, or some other factor, to the power-generators, e.g., increasing the coal or natural gas used in a fossil-fuel steam turbine power plant, or increasing supply of hydrogen and oxygen to fuel cell, etc.

Alternative energy sources typically have complex power output characteristics. For solar photovoltaic (PV) panels the maximum voltage out of the panel corresponds with zero current while maximum current corresponds to zero voltage - both points of zero power (the product of current and voltage). For wind generators maximum speed produces maximum voltage, similar to the solar panel open circuit case. Thus, extracting energy from a wind generator will reduce its speed, and overloading it will make it stop. Frequently, a single source of renewable energy produces neither sufficient nor reliable power throughout a day. Thus, multiple sources and different types of renewable energy are combined together for a given commercial or residential application. Most renewable energy sources deliver power in the form of a direct current (DC). However, the national power grid and most applications, e.g., residential, commercial, and retail, are designed for alternating current (AC). If each renewable energy source in an application had a separate inverter to convert the voltage from DC to AC, then the renewable energy system would be costly, as inverters are expensive.

An additional problem with solar PV panels is the difficulty of optimizing the operating point for an array of panels. For example, if different solar panels are partially shaded or are sourced from different manufacturers or batches, they will output different voltages and currents. Trying to reconcile these different output performances into a given application, e.g., into a household or back into the AC grid would require sophisticated and costly power electronics to match performances, or alternatively would potentially result in a substantial loss of power because of mismatched performances.

Additionally, if renewable energy sources provide power at a higher voltage than the existing wiring of a given application, e.g., residential, commercial, industrial, then a substantial amount of time and cost would be required to retrofit the wiring to accommodate the higher voltage.

### SUMMARY

A method and system for integrating and managing one or more power-generators and one or more power-consumers, all coupled to a DC bus in a manner that provides demand response automatically and robustly with smooth transitions and without centralized control. The system is modular and self-balancing, whereby power-generators ("PGs") and power-consumers ("PCs") may be added or removed to the system without any other changes to the system.

The system allows the operating voltage of the DC bus to float between a minimum bus operating voltage and a maximum bus operating voltage, or a peak safe bus voltage, with the instantaneous, or actual, bus operating voltage depending upon the amount of power supplied to the DC bus by the power-generators at different bus operating voltage levels and depending upon the corresponding amount of power consumed from the DC bus by the power-consumers at those given different bus operating voltage levels. Power-generators and power-consumers (devices) can be designed or adjusted to have different control voltage ranges ("CVRs") with an associated nominal and transition, or minimum and maximum, voltage levels, over which the device will turn on and will turn off, respectively. As the instantaneous bus operating voltage changes, it will move into and out of CVRs of individual devices, thereby causing them to locally activate or deactivate, or causing them to adjust the level of power produced or consumed. Thus, by providing a range of voltages over which the DC bus can operate, and by providing CVRs for the devices coupled to the DC bus, a demand/response system is created that automatically and autonomously balances and self-regulates itself. That is, a variation in the operating voltage of the DC bus (different operating voltage levels) controls an operation of at least one power-generator and/or at least one power consumer based on a variation in the DC bus operating voltage and based on a voltage control range of the power-generator and/or the voltage control range of the power consumer, through which the bus operating voltage will cross Thus, by spacing out CVRs for multiple PCs across the bus operating voltage range, PCs can selectively be activated and prioritized without having a centralized control and monitoring. Similarly, by spacing out CVRs for multiple PGs, whether controlled renewable power or controlled power, across the bus operating voltage range, PGs can selectively be utilized to drive different bus operating voltages, depending on values and importance of loads, focus on conservation, etc. Used together, the PGs and PCs make an automated and configurable system that is modular, flexible, robust, customizable, reliable and easy to implement.

The system allows CEPGs, such as utility grid power, to activate and supply power to the DC bus at low bus operating voltages in order to pull the bus operating voltage up from the minimum bus operating voltage. The system also allows UEPGs, such as solar power, to supply power to the DC bus at any time, with strong power generation from UEPGs typically occurring at mid-day and thereby driving the bus operating voltage up towards a peak safe bus voltage if there are only constant loads coupled to the bus. However, because an increasing bus operating voltage will wander, or transition, into devices with a CVR located at a higher voltage, these devices with the higher CVRs will activate and start consuming power from the DC bus, thus, pulling the bus operating voltage down from the peak safe bus voltage. Even if existing power-consumers, such as lighting, heating water, operating motors, etc., are insufficient to consume the available power supplied to the system, e.g., from a strong solar or wind day, then so-called opportunistic loads may be used to capture this available power, while pulling the bus operating voltage down from a peak safe bus voltage. By intelligently designing the CVRs of power-generators and power-consumers across the spectrum of a narrow but variable bus operating voltage range, the system can automatically provide local demand/ response.

As an example, the system begins a typical day with no significant power sourced from the alternative power-generators UEPGs to the DC bus, since the sun and wind power are typically weak at the beginning of the day. Instead, the primary source of power to the DC bus is provided by controlled-energy power-generators ("CEPGs), such as a utility grid rectified power-generator, which is designed to have a minimum voltage level, for the voltage control range, near the lower end of the DC bus voltage range, but above the minimum bus operating voltage for the bus. Power-consumers ("PCs") coupled to the DC bus that are necessary for a given application, e.g., residential, commercial or industrial, or are greedy, such as lighting, household appliances, computers, and other such-designated loads, have a CVR, e.g., a transition or turn-on voltage, that is low enough that they will be powered at any bus operating voltage, including the minimum bus operating voltage and possibly lower. Thus, these PCs are automatically powered by the DC bus as the day begins. If the power-consumers create a substantial enough load on the DC bus, or if a CEPG is inadequate to meet the load demand, e.g., a brownout condition, then the PCs may pull the operating voltage of the DC bus down closer to the minimum bus operating voltage. At that point, the bus operating voltage of the DC bus may wander into a CVR, e.g., a transition or turn-on voltage, of a battery backup system coupled to the DC bus that was intended for load balancing. As the day progresses, if some loads are shed, the bus operating voltage would typically move back up and out of the CVR of the battery backup system, but remain in the CVR of the CEPG utility grid rectified power-generator.

As the day progresses further, UEPGs such as solar energy sources would typically become more active and provide an increasing amount of power to the DC bus such that the bus operating voltage would increase for a given flat load on the bus. As the bus operating voltage increases, it could have sufficient capacity to power the entire load on the DC bus, if properly sized for the application. Thus, the bus operating voltage would begin to rise to a point where it wanders out of the CVR of the grid-rectified CEPG, e.g., where the bus operating voltage first meets then exceeds a maximum voltage level of the CVR for the grid-rectified CEPG. At that point, the grid-rectified CEPG respectively produces minimum then zero power generation. The bus operating voltage would continue to rise as the solar UEPG became more active, eventually crossing into the different CVRs of additional PCs coupled to the bus, such as a grid-tie inverter that would then start to consume power and pump it back into the utility grid. In the present example, the grid-tie inverter would sell power back to the utility grid, and thus provide a power or cash credit for the given system owner. If the UEPG solar energy source continued to generate more power than the existing load could consume, including the grid tie inverter PC, then the bus operating voltage would continue to increase, heading towards the maximum bus operating voltage. At this point the bus operating voltage wanders higher into the CVR of additional PCs coupled to the grid that are referred to as opportunistic power consumers whose primary purpose is to draw power from the DC bus and store it, e.g., by heating water in a water tank for later consumption, or freezing water for later cooling needs, charging backup batteries, etc. If the UEPG solar energy source still continued to supply power to the DC bus in excess of all the PCs ability to consume the power, including opportunistic PCs, then the UEPG solar energy source would eventually push the bus operating voltage up high enough to where it meets a voltage limit of the UEPG solar energy source, e.g., near the maximum bus operating voltage, at which point the UEPG solar energy source would be voltage limited and shut down in order to prevent the bus operating voltage from exceeding the maximum bus operating voltage.

As sunlight wanes in the afternoon, power generated by the UEPG solar energy source would be reduced to the point where the power consumed by the PCs on the DC bus exceed the power generated by the UEPGs. At this point, the bus operating voltage would begin to drop, and thus wander out of the CVR, e.g., the transition voltage, of the opportunistic PCs, then at a lower bus operating voltage it would wander out of the CVR, e.g. the transition voltage, of the normal PCs, such as the grid-tie inverter PC, with the load thus being reduced on the DC bus so as UEPG decreases, specific types of loads on the bus are gradually and automatically shed. The power consumption profile of a given PC can be gradual to provide damping and prevent bouncing, oscillations, or other instabilities in the system that might otherwise arise from a sudden change in state, e.g., shutting off a PC abruptly. However, the present disclosure is well suited to a wide variety of turn on and off algorithms, adapted to a particular application's specific needs. As the bus operating voltage would otherwise drop, and as loads on the bus would continue to drop, the DC voltage would eventually self-balance when considering all the power consumers and all the power generators. As the UEPG solar energy source totally disappears, the bus operating voltage continues to drop down below the minimum uncontrolled power operating voltage, at which point, only necessary, or greedy, PCs would be consuming power from the DC bus, and at which point CEPGs would come on line, such as battery backup, for load balancing and/ or the grid-rectified CEPG, depending upon their relative CVR. A wide range of scenarios and embodiments can be fulfilled by the present disclosure, as needed to suit a particular application with particular needs.

The methods, systems, and apparatuses disclosed herein may be implemented in any means for achieving various aspects, and may be executed in a form of a machine-readable medium embodying a set of instructions that, when executed by a machine, cause the machine to perform any of the operations disclosed herein. Other features will be apparent from the accompanying drawings and from the detailed description that follows.

The present invention is defined by the features of the appended claims.

### BRIEF DESCRIPTION OF THE VIEW OF DRAWINGS

Example embodiments are illustrated by way of example and not limitation in the figures of the accompanying drawings, in which like references indicate similar elements and in which:
**Figure 1** is a functional block diagram of a system for providing demand/response performance between multiple power-generators and multiple power-consumers with distributed control voltage ranges on a DC bus, according to one or more embodiments.
**Figure 2** is a schematic of the system for providing demand/response performance between multiple power generators and multiple power consumers on a DC bus, according to one or more embodiments.
**Figure 3A** is a load curve of the demand/response system with a single controlled power-generator, a single uncontrolled power-generator, and a grid-tie inverter power-consumer all coupled to the DC bus, according to one or more embodiments.
**Figure 3B** is a power curve of an uncontrolled-energy power-generator having a control voltage range and a foldback limit, according to one or more embodiments.
**Figure 3C** is a power curve of a controlled-energy power-generator, having a control voltage range and a foldback limit, according to one or more embodiments.
**Figure 3D** is a power-consumption curve illustrating the aggregated loads on the DC bus, and changes thereto, as the bus operating voltage increases or decreases, according to one or more embodiments.
**Figure 4** is a flowchart of the operation of the demand response system, according to one or more embodiments.
**Figure 5** is a case table of demand response scenarios performed by the demand response system, according to one or more embodiments.

Other features of the present embodiments will be apparent from the accompanying drawings and from the detailed description that follows.

### DETAILED DESCRIPTION

A method, apparatus and system of a local demand/response system that integrates alternative energy sources, traditional energy sources, and loads on a DC bus to provide distributed, independent, and self-regulating performance is described. In the following description, for the purposes of explanation, numerous specific details are set forth in order to provide a thorough understanding of the various embodiments. It will be evident, however, to one skilled in the art that various embodiments may be practiced without these specific details.

Described here is a system and method to distribute the electrical or electronic control throughout the generation system such that cost and power generation is adapted or optimized for a given application. To do this each energy-generating device is operated optimally, and the complexity of the associated electronics is minimized. The approach taken uses a DC bus that is controlled within a narrow voltage range to connect all the devices in the generation or consumption scheme. That is, the voltage range is sufficiently large to allow different power consumer and generator devices turn-on and turn-off voltage tolerances, and sufficiently narrow to prevent fluctuations in performance of power consumers noticeable to a user or a given application's needs. The voltage used for the DC bus is determined by the local supply line voltage (120 ± 6V root mean square [rms] in the USA), for simple power conversion from the DC bus to supply the AC grid, the nominal DC bus voltage should be greater than the either the peak or the peak-to-peak AC voltage by enough margin such that losses in the power electronics are sufficiently compensated (normally a few volts). Thus, for the US market the nominal DC bus voltage is a minimum of about [(126V x √2) + 5V] ≈ 185V. Since there will be a limited amount of storage (capacitance) on the DC bus, the nominal voltage is designed to be above the minimum voltage by a sufficient amount such that the ripple due to variable load over a half mains cycle (1/120th of a second at 60Hz) will not drop the bus more than from nominal to minimum if there is a loss of power input to the bus. The system is therefore designed to work on a 190 ±5 Vdc (equals 185Vdc minimum) bus in the USA.

Generators attached to the DC bus (e.g. solar panels, wind turbines, etc.) are expected to generate power at voltages below the DC bus level internally and then use a "boost chopper" DC-to-DC converter to transfer power to the DC bus, e.g., an up-converter. Other power conversion topologies can be used but topologies where the internal voltage crosses the DC bus voltage are likely to be more complicated and thus more expensive. The up-converter circuitry will attempt to maximize the average current it feeds into the bus since power equals voltage times current, and the voltage is essentially fixed by using the bus. Thus, accurate measurement of the current and voltage is not required. The up-converter will cut out at the peak bus voltage level (195Vdc as described above for applications in the USA) or somewhere below it yet above the nominal DC bus voltage so that the bus voltage is always limited to a safe level. In this manner, a cutout can be softened to avoid a sharp drop, thereby promoting system stability. Additionally, the proper tolerance setting of the peak bus voltage and the nominal DC bus voltage provides for less expensive components with less precise voltage settings (CVR) but with reasonable safety limits, e.g., the electronics will tolerate some level of over-voltage. This mode of operation is called "generator" mode.

Inverters or other devices that consume power from the bus can work in a "master" or "slave" mode. There is only one master device on the bus at any one time, and the control functions of the master may be moved to devices that are not attached to the DC bus, e.g., a computer coupled to the Internet for Smart Grid control. In slave mode, a device will consume power when power is available (e.g., the bus voltage is greater than the minimum bus operating voltage, e.g., above 185Vdc for the USA - by some nominal amount), or when the master instructs a slave device to do so (if communication is enabled). Slave loads will take power from the DC bus in a smooth transition where possible and as a function of the bus voltage so as not to destabilize the bus, e.g. a battery charger will ramp up to full load over period of time and will vary over a range of voltages (e.g., from full load when the DC Bus is operating near nominal to no load as the bus voltage drops to near minimum generation). The master is expected to be the device that manages the transfer of power to the grid, e.g., via a DC-to-AC converter, and it will vary the power transfer such that the DC bus is held at the nominal level (190Vdc for the USA).

Other loads that may draw power from the DC bus include battery chargers for either backup power or electric vehicle use. These batteries are better charged directly from the DC bus rather than incurring the losses from converting DC to AC then back to DC again. Likewise, some kinds of lighting electronics may be run more efficiently if powered from a DC bus. When there are no active renewable sources on the DC bus, the master may use an up-converter, e.g., sourced from a utility grid, to maintain the DC bus at its minimum voltage (185Vdc for the USA), or may notify the backup battery charger to do so (if it is separate equipment). Since multiple backup sources maybe attached to the DC bus, automatic load distribution is achieved by having each of the multiple backup sources provide power at a voltage that varies from a minimum supported level by the generators (the aforementioned 185Vdc) for minimum power, to a maximum supported level by the generators for maximum power at a lower voltage (e.g., 184Vdc for USA).

The load curve for a system described above would resemble a load curve illustrated in the following diagrams. Under normal generation conditions, the DC Bus operates near the noninal operating voltage. If more power is generated than is needed, then the bus voltage will increase until the generators self-limit when they approach or reach a maximum (allowed) voltage for the system. If less power is being generated the current and bus voltage will drop off as the available power decreases hitting the minimum voltage for generation as generated power hits zero. Below that bus voltage, the backup power would kick in and hold up the bus voltage at or above a minimum voltage.

In a simple system, the components do not need to communicate to each other directly. Rather, they communicate indirectly by looking at the bus voltage. Because generators will work optimally over a large output voltage range, the AC-to-DC converter may adjust the operating point down if that improves efficiency (for lower AC line voltages). In a more complex system extra communication may take place beyond monitoring bus voltage, and devices may have their various operating parameters adjusted, e.g. if the operating voltages are adjusted up or down to improve the efficiency of the overall system that will be communicated to other components to avoid conflicts such as battery backup kicking in prematurely. Communication may be performed through the DC bus itself using "wire line" communication hardware. Components attached to the DC bus will be constructed such that they do not block or degrade such wireline communication.

In a "smart grid" environment, it may be desirable to have the battery backup/chargers return power to the AC line at the same time as power is coming from renewable sources. This requires that those battery backup/chargers can switch to generator mode if instructed to do so by the master or some other device.

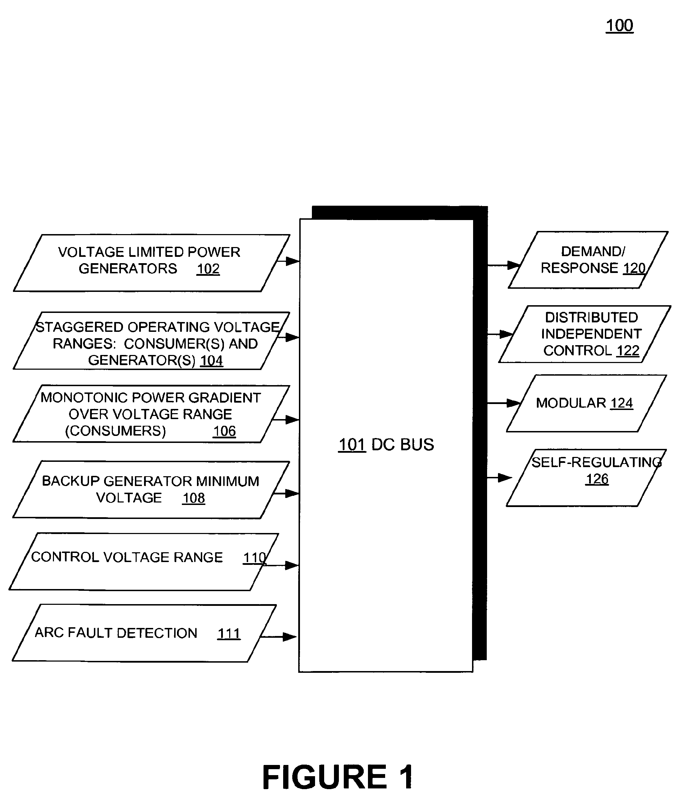

Referring now to **Figure 1****,** a functional block diagram 100 of a system for providing demand/response performance between multiple power-generators and multiple power-consumers with controlled voltage ranges on a DC bus, is shown according to one or more embodiments. A main function is providing a DC bus 101 to interface between inputs and outputs. Input functions include, but are not limited to voltage-limited and foldback-limited power-generators 102, staggered operating voltage ranges 104 for both power-consumers and power-generators, monotonic power gradient power-consumers 106, backup power-generator minimum voltage 108 and a control voltage range 110, and arc-fault detection 111. The output functions from the system include, but are not limited to demand response performance 120, distributed independent control 122, modular capability, or modularity, 124, and self-regulating 126. These functions are enabled in the subsequent apparatus, system, and methods of use in order to provide a solution to integrate and manage a wide variety of potential energy sources for a wide range of power-consumers with different priorities. The result is a robust and low-complexity system that is well suited to the local needs of residential and commercial applications. Some inputs can be designed by a system or device designer, such as monotonic power gradients for power-consumers, while other inputs can flexibly programmed by a local-user or system administrator, such as backup power-generator minimum voltage level 108.

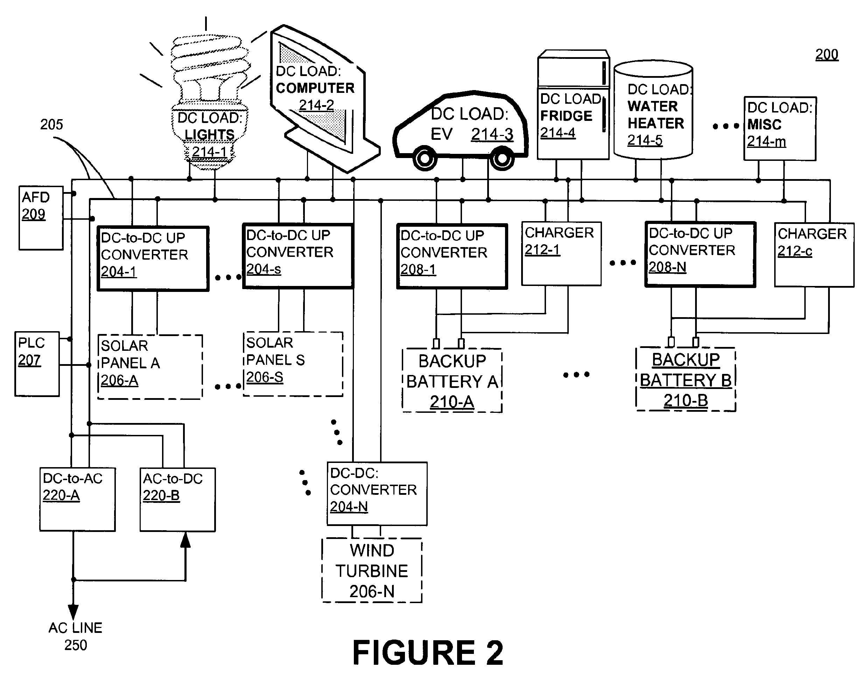

Referring now to **Figure 2****,** a schematic of the system 200 for providing demand/response performance between multiple power generators and multiple power consumers on a DC bus 205, is shown according to one or more embodiments. Any type of DC load, referred to herein as a power-consumer ("PC") can be utilized in system 200, including, but not limited to: DC-powered lighting 214-1; DC-powered computing equipment 214-2; electric vehicle (EV) battery packs 214-3; DC-powered refrigerator 214-4; DC-powered water heater 214-5; charger to backup batteries 212-1 to 212-c, DC-to-AC grid-tie inverter 220-A; and other miscellaneous DC-powered equipment and appliances 214-m. As shown, PCs simply couple onto the DC bus, and can be selectively removed or added to the system without any central control or programming to obtain the demand response performance. While some PCs can operate satisfactorily without a control voltage range ("CVR") and simply be 'on' over the bus operating voltage range, an improved performance of system 200 occurs if one or more of the PCs have a CVR that allows them to be selectively activated and deactivated depending on the actual bus operating voltage. In one embodiment, the CVR for a given PC is fixed, while in another embodiment, the CVR for one or more PCs is variable and configurable, e.g., via manual setting of a selectable voltage range, or virtually and/or remotely selected via a connection, e.g., USB, to the Internet or mobile device for a user or system administrator (power broker or utility company) to set based on utility grid conditions. An example of a CVR refrigerator 214-4 would be a solid-state peltier cooler with configurable voltage settings for turning on and off, and at what load level depending upon the DC bus voltage. Similarly, an example of DC load water heater 214-5 would be one with a controllable switch to turn on at different voltages, and with solid-state electronics, vary the load depending on the DC bus voltage. One more example of a charger 212-c, or EV load 214-3 would be an electronically controlled battery charger that varies the load pulled by the charger based on the voltage level of the DC bus.

Similarly, any type of DC power source or rectified AC power-source, referred to herein as a power-generator ("PG"), can be utilized in system 200, including but not limited to: solar photovoltaic ("PV") panel A 206-A through solar PV panel S 206-S, battery backup A 210-A through battery backup B 210-B; wind-turbine 206-N, and AC-to-DC rectifier 220-B; optional EV battery pack 214-3; and any other source of electrical power. Some renewable energy sources, such as PVs and wind-power, are represented as low-voltage current sources that require an in-line DC-to-DC up converter 204-1 through 204-s, and 204-N respectively, e.g., a boost-type DC-to-DC converter, to reach the desired bus operating voltage level. Similarly, backup battery sources 210-A through 210-B utilize DC-to-DC up converters 208-1 through 208-N. Like PCs, while some PGs can do without a control voltage range ("CVR") and simply be always 'on' over the bus operating voltage range, an improved performance of system 200 occurs if some or all of the PGs have a CVR that allows them to be selectively activated and deactivated depending on the actual bus operating voltage. In this manner, a substantial amount of energy efficiency and cost-savings can be realized using system 200.

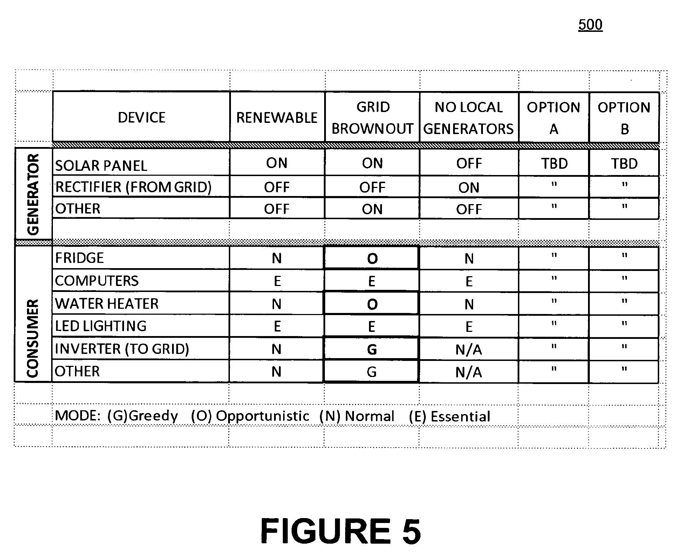

A CVR for any given PC and/or PG can be dynamically variable internally by design, and/or can be modifiable externally. For example, battery charger 212-c has internal circuitry that can dynamically vary the CVR start-point and stop-point values and/or the load drawn from bus 205 for backup battery B 210-B such that as backup battery 201-B approaches a full charge, less current is drawn from bus 205 and/or current is only drawn at a higher bus voltage, e.g., to match the slower charge rate, higher internal batter voltage, or to prevent overcharging. A similar scenario exists for water heater 214-5, or for refrigerator 214-4, each of which needs less power as they approach their target temperature. This variable load draw can be modified externally, e.g., by a user wanting to fast charge their EV. A change in the load draw for a given PC could result in a change in the mode of the PC or PG, e.g., from a greedy to an opportunistic category as described in subsequent **Figure 5****.** Additionally, CVRs can be staggered and/or overlap each other such that PCs and/or PGs can drift past/through each others' CVRs, thus creating a rolling transition rather than a discrete turn on (activation) or turn off (deactivation) voltage, or event. The activation and deactivation voltages are also referred to as transition voltages. Alternatively, CVRs for PCs or PGs can have voltage gaps therebetween for some power usage scenarios, e.g., for providing a visible signal to a user of a system that a transition in power supply is occurring for training purposes or to help monitor and conserve power usage. An uncontrolled-energy power-generator can use any type of natural energy such as a solar panel, a wave-powered generator, a wind-powered generator, etc. A controlled-energy power-generator can use any type of controlled-energy power-generation such as: a fuel-cell power-generator, a battery backup power-generator, a grid-rectified power-generator, a rectified AC power-generator, a fossil-fuel power-generator, a nuclear-powered generator, etc. Any combination of uncontrolled and controlled energy-generators can be used in system 200.

Thus, in effect, the level of the bus operating voltage becomes the information signal that activates and deactivates PG and/or PC devices coupled to the DC bus 205. System 200 can include optional power line communication (PLC) module 207 that uses a wireline modulator to provide a modulated signal over the DC, signal communicated on bus 205 for an optional layer of centralized control over any combination of PGs and/or PCs, or other sensors or devices coupled to bus 205. Furthermore, while system 200 presents a given quantity and type of PGs and PCs, the present disclosure is well suited to using any combination of PGs and PCs on bus 205. While system 200 is illustrated using residential and commercial devices operating at a nominal voltage level, system 200 operates equally well on systems with scaled up voltage levels of 2x-10x, 10x-100x, 100x-1000x, etc. up to megavolts and beyond as national power generation and distribution levels continues to increase, using the same principles of CVR and bus operating voltage fluctuation to act as the activation and deactivation signal to the power-generators and power-consumers. In the case of a national power grid, power-generators could be nuclear, coal, hydroelectric, and other types of power plants, while power-consumers could be different distribution nodes of cities, industrial parks, power-grid segments, etc.

For safety precautions and reduced installation cost, standalone arc-fault detection (AFD) circuit 209 provides the arc-fault function 111 of Fig. 1. In particular if AFD 209 detected on the bus any electrical aberrations beyond a threshold electrical value and beyond a given threshold period of time and, e.g., voltage aberrations beyond a set amount of microseconds to milliseconds time, then AFD 209 would deactivate, e.g., short across, bus 205 momentarily, e.g., some time factor in the milliseconds range. In response, PGs such as AC-to-DC rectifier 220-B and DC-to-DC up converter 208-1, would have current limiting circuitry in the present embodiment that would trip as they started to ramp up current supply from the short, thus preventing them from supplying excessive current to bus 205. Thus, PGs with current limiting would trip when AFD 209 was activated. Then when AFD 209 reset after a period, the PGs would also reset, e.g., after a period slightly longer than the period for AFD, and continue functioning to provide power to bus 205. Given the AFD 209 activation would occur in the milliseconds range or less, the entire process of arc-fault detection and prevention would be transparent and undetectable to PCs and ultimately to the user of system 200. In an alternative embodiment, an arc-fault detection circuit can be designed into each of the PGs and used either with or without standalone AFD circuit 209. Thus, if all power supplied to bus 205 is actively controlled in this manner, then arc-faults are not possible in system 200 and a grounding conduit, that is otherwise required for a bus, can be avoided along with the cost of materials and installation of same. Most or all PCs in system 200 have enough intrinsic power storage internally to smooth out the arc-fault cut-out and thus be virtually unaffected by the arc-fault cutout. There is limited capacitance that is directly connected to bus 205, in the present embodiment, that could otherwise provide a safety hazard from a short on the bus. That is, all PGs have electrical circuitry, e.g., DC-to-DC up converter 208-1, that is disposed between the actual power source, e.g., a battery cell in backup battery A 201-A, and bus 205, with the ability to implement a current cutout for an excessive current flow through the PG.

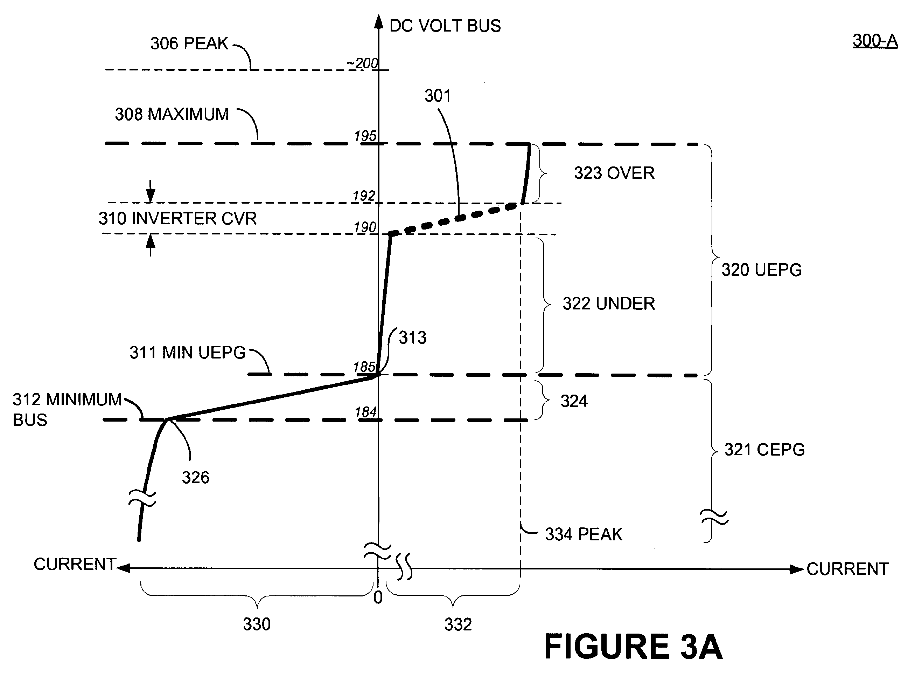

Referring now to **Figure 3A****,** a load curve graph 300-A of the demand response system with a single controlled energy power-generator, a single uncontrolled-energy power-generator (UEPG), and a grid-tie inverter power-consumer all coupled to the DC bus, is shown according to one or more embodiments. Figure 3A represents the use of the following equipment from Figure 2: a grid AC-to-DC rectified CEPG, e.g., 220-B; a solar panel, e.g., 206-A UEPG coupled with DC-to-DC up converter 204-1, and a DC-to-AC grid-tie inverter (GTI) power-consumer, e.g., GTI 220-A, all coupled to bus 205. A system load curve 301 (solid and dashed) includes a plurality of voltage ranges over which the bus operating voltage can float or drift, depending on the quantity and amount of PC loads and depending upon the power generating capability of PGs as effectuated by the CVR and other operating characteristics of the PC and PG devices. In the present embodiment, system load curve 301 has two voltage ranges that share a common transition or threshold voltage point, the minimum uncontrolled energy operating voltage 311. The first voltage range is an uncontrolled, or supplemental, power-generator voltage range 320, (for renewable energy sources) that corresponds downward onto the horizontal axis as an uncontrolled power-generator current range 332, which can be equivalent to the current consumable by an appropriately sized grid-tie inverter power-consumer, in one embodiment. The second voltage range is a controlled energy power generator voltage range 321 (for grid, utility, or other controllable energy sources) that corresponds downward onto the horizontal axis as an controlled power-generator backup current range 330. Voltage range 323 represents an over generation of power by the uncontrolled power-generator, e.g., a very clear and intensely sunny day for a PV, that exceeds an inverter control voltage range (CVR) over which it is designed to operate most efficiently. If grid-tie inverter power-consumer cannot consume all the power provided in the over-generation range 323, and if no additional loads are brought on line to pull bus operating voltage down, then bus operating voltage will rise to a maximum bus operating voltage 308. At this point, a voltage limit of the uncontrolled power-generator is reached, resulting in a power limiting of the uncontrolled power-generator and a termination of the system load curve 301 until the voltage is reduced by additional loads on the bus and/or reduced power generation from one or more UEPGs (e.g., reduction in sunshine, wind, etc.) and the circuit of uncontrolled power-generator is reset or reactivated.

As the energy source for the uncontrolled energy power-generator ("UEPG") wanes, bus operating voltage of the DC bus 205 first drops below an inverter control voltage range 310, at which point the inverter ceases to consume power, and into an under-generation range 322, with a corresponding reduction in current produced. Bus operating voltage can continue to drop down to the minimum uncontrolled power operating voltage 311 whereat the current produced by the UEPG is essentially zero. If any parasitic loads or new loads are activated on the DC bus, then voltage level will continue to drop, since no alternative energy source can power the DC bus. However a controlled energy power-generator ("CEPG") from the grid AC-to-DC rectifier, or alternatively a backup battery, having a control voltage range ("CVR") that spans from minimum uncontrolled power operating voltage level 311 down to the minimum bus operating voltage 312, represented by voltage range 324, will activate at that bus operating voltage and consequently provide power to the DC bus, as represented by backup current range 330. If additional power consumers are brought online to the DC bus, e.g., as necessary loads, the bus operating voltage will decline per the design capability of the CEPG inverter until reaching 312 minimum bus operating voltage at point 326 representing the rectifier power rating. Below point 326, backup batter can activate, e.g., for a brownout condition where power generated by rectifier is insufficient to power the loads on the bus.

Load curve 301 can be traversed up and down the voltage range, with corresponding changes in the current, as quickly or slowly as the devices perform or respond, and/or as frequently as occurs for a given system and environmental conditions. Thus, for an erratically sunny/ overcast day, with intermittent cloud coverage, load curve 301 can be traversed repeatedly over a short period of time, with the user of system 200, e.g., a residential house, essentially not realizing the underlying transparent operational changes in the power supply, assuming nominal variation in power-consumer operation, e.g., the dimming of lights over the voltage range is imperceptible. An overall voltage range of UPEG 320 plus CEPG 321 can be as broad or narrow as desired for a given system, whether individually or together in any combination, and as enabled by CVR and device performance. Damping can also be built in to system 300, by staggering CVRs apart from each other, or by designing gradual turn-on and turn-off rates with increasing or decreasing loads respectively, etc. Exemplary values of voltage levels for peak 306, maximum 308, inverter CVR 310, minimum UEPG 311, and minimum bus 312, are provided as 200V, 195V, 192V, 190V, 185V, and 184V respectively. The present disclosure is well suited to a wide range of values can be used with specific offsets increments and/or percentages being selected to provide a given mode or scenario of operation with turn-on and turn-offs.

Different combinations of power generators with different CVRs can be used for different purposes. For example, one combination of power generators results in a first power-generator having a maximum voltage level that is less than, and closer to the minimum bus operating voltage than, a maximum voltage level of the second power-generator so as to provide a demand /response performance; wherein the first power-generator only activates at a lower DC bus operating voltage than the second power-generator in order to supply additional power to the DC bus to pull the operating voltage of the DC bus above the minimum bus operating voltage. In a different combination of power generators a minimum voltage level for a second power-generator is higher than the minimum voltage level for a first power-generator so as to provide a demand/response performance wherein the second power-generator reaches maximum power generation at a higher DC bus operating voltage than the first power-generator in order to reduce power contributed to the DC bus by the second power generator as the bus operating voltage drops below the minimum voltage level of the second power-generator. In yet another embodiment, a rectifier controlled-energy power-generator coupled to the DC bus can be rated for a maximum bus load, thereby having an ability to pull the operating voltage of the DC bus above the minimum bus voltage for all bus loads that are less than or equal to the rated bus load. One or more backup power-generators, e.g., any combination of a DC battery backup power-generator, fossil-fuel powered generators, rectified AC backup power-generator, etc., can be coupled to the DC bus to supply a minimum power to the DC bus when the bus operating voltage is at or below a minimum uncontrolled power-generator operating voltage and to supply a maximum power to the DC bus when the bus operating voltage is at a minimum bus operating voltage.

Different combinations of backup generators can be used to accomplish different scenarios of backup to supply power in voltage range 321. For example, a first backup power-generator having a turn-off voltage that is higher than a turn-off voltage of a second backup power-generator will be prioritized over the second backup power-generator to start providing current to the DC bus first as the bus voltage decreases from weakening supplemental or uncontrolled energy, power-generators. Both backup power generators are assumed to have a same turn-on voltage equal to the minimum bus operating voltage 312. A utility-grid backup power-generator can be operated in a backup mode when the DC bus voltage is below a minimum supplemental power-generator operating voltage, and is operated in a supplemental generation mode when the DC bus voltage is above the minimum supplemental power-generator operating voltage. A power-generator can also be a power-consumer depending on a level of the operating bus voltage and the state of the device, e.g., a battery backup can be a power generator when it is sufficiently charged and the bus voltage is sufficiently low and also be a power consumer when it is sufficiently discharged, and the bus voltage is sufficiently high, e.g., the DC bus voltage is below or above a minimum uncontrolled power operating voltage, respectively.

In other words, a given bus operating voltage will automatically prioritize power-consumers and power-generators having a control voltage range that encompass an instantaneous bus operating voltage over other power-consumers and power-generators, respectively, having a control-voltage range that is outside of the instantaneous bus operating voltage. For example, a first power-consumer with a lower turn-on voltage than the turn-on voltage for the second power-consumer is prioritized over the second power-consumer to start consuming power from the DC bus at a lower operating voltage of the DC bus. That is, a power-consumer having a turn-on voltage level below the minimum uncontrolled energy power-generator operating voltage will operate regardless of whether the one or more supplemental power-generators are producing sufficient power to pull the bus operating voltage above the minimum uncontrolled-power-generator voltage. Likewise, a power-consumer having a turn-on voltage level above the minimum uncontrolled-power-generator operating voltage is only selectively operated when one or more supplemental, or uncontrolled, energy power-generators are producing sufficient power to pull the bus operating voltage above the minimum uncontrolled-power-generator voltage. An operating power-consumer having a control voltage range with a minimum and a maximum, will have a minimum power consumption near or approximately at the minimum, or turn on voltage level, of the control voltage range and a maximum power consumption near or at the maximum of the control voltage range. In general system 200 will automatically prioritizes power-consumers and power-generators having a control voltage range that encompass an instantaneous, or actual, bus operating voltage over other power-consumers and power-generators having a control-voltage range that is outside of the instantaneous bus operating voltage, as illustrated by load curve graph 300-A.

In the case of a grid tie inverter (GTI) PC, e.g., AC-to-DC block 220-B of Figure 2, the GTI draws a maximum load from system 200 that will maintain the bus voltage within inverter control voltage range 310 of Figure 3A in order to create a target voltage for photovoltaic (PV) uncontrolled power generators by which maximum power point tracking (MPPT) can be accomplished by having the PVs optimize their current production, e.g., the voltage and current product is independently managed by two different components, thus reducing circuit complexity and increasing robustness. If the UEPG over-generates power the bus voltage will move into voltage region 323, where additional PC loads can selectively be added to the bus per the CVR of those additional PC loads, and if the UEPG under-generates power, the bus will move into region 322, where given PC loads can be selectively removed from the bus per the CVR of those given PC loads. Thus, PC devices can control the bus voltage in the UEPG voltage range 320. In contrast to some traditional power generator schemes that focus on maintaining a single operating voltage level, with only minor tolerances or variations, the present disclosure desires, and benefits from, a fluctuation of the bus operating voltage as a means of providing control and signaling to PCs and PGs coupled to the bus, so long as the range of the fluctuation is reasonable and within limits, e.g., the maximum bus operating voltage 308 and the minimum bus operating voltage 312.

A power consumption varies monotonically, as shown in **Figure 3A****,** for each power-consumer, e.g., as shown in **Figure 2****,** between the minimum and the maximum of the control voltage range of each of the respective one or more power-consumers. In particular, a grid-tie inverter power-consumer 220-B coupled to a AC line 250 (utility-grid) wherein grid-tie inverter 220-B has a current-consumption capability that exceeds a maximum cumulative current-production capability of the supplemental, or uncontrolled, energy power-generators coupled to the DC bus 200 in order to keep the operating voltage of DC bus 205 at or below the maximum bus operating voltage 308. A minimum operating voltage 312 of the DC bus 205 can be set by a turn-on voltage setting one or more power-consumers. If all power consumers are turned off, then no current is being consumed and a voltage level will be defined by a cutout level of a power generator coupled to DC bus 205.

The operating voltage illustrated in load curve 300-A for DC bus 205 is created by control voltage ranges of the PGs and PCs to be greater than a peak AC grid voltage of a utility grid that is coupled to the DC bus 205. In this manner, only a buck-type DC-DC converter portion is needed in the DC-to-AC grid-tie inverter 220-A power-consumer is necessary to supply power from DC bus 205 to AC line 250 (utility grid)., and only a boost-type DC-DC converter portion of AC-to-DC rectifier power-generator 220-B is necessary to receive power from the AC line 250 (utility grid) to DC bus 205. Additionally, the peak safe bus voltage 306 is set for the DC bus 205 at less than or equal to a voltage rating of a given application, e.g., existing building wiring.

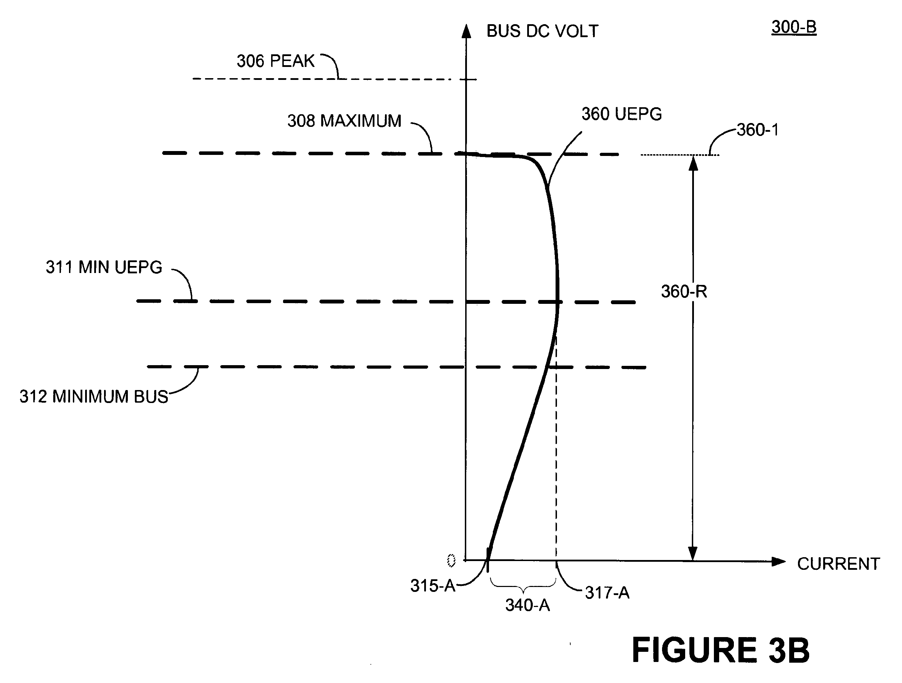

Referring now to **Figure 3B****,** a graph 300-B of power curve 360 of an uncontrolled-energy power-generator UEPG having a control voltage range and a foldback limit, is shown according to one or more embodiments. Control voltage range 360-R spans from a turn-on activation voltage of about 0 volts up to a turn off, or self-limiting voltage level 360-1 that is approximately the maximum bus operating voltage 308. Power curve 360 can represent an alternative energy source such as a solar, or PV, cell, e.g., 206-A of **Figure 2****.** Power curve 360 has a voltage range 360-R that spans from zero volts up to a maximum bus operating voltage 308. At zero volts, UEPG has a nominal foldback, or current, limit 315-A, spanning over current range 340-A, designed into the power electronics as known by those skilled in the art. A maximum current rate 317-A occurs between voltages of approximately the minimum uncontrolled power operating voltage 311 and the maximum bus operating voltage 308, at which point a voltage limit in the UEPG will self-limit the power-generator or will restrict the power output in order to prevent the bus operating voltage from exceeding the maximum bus operating voltage 308. Foldback limit 315-A restricts current production of the given device as voltage level on the bus drops below the minimum bus voltage level and proceeds toward zero volts. The specific shape and break points in power curve 360 can vary widely between different types of uncontrolled-energy power generators, e.g., wind, solar, wave, etc. and between different designs, materials, and device characteristics with in a type of alternative uncontrolled energy power generators, while maintaining key features of the voltage limit at 308, a near constant current in operating range between maximum voltage 308 and minimum uncontrolled power operating voltage 311, corresponding to near constant current of 317-A, and foldback for safety down to point 315-A.

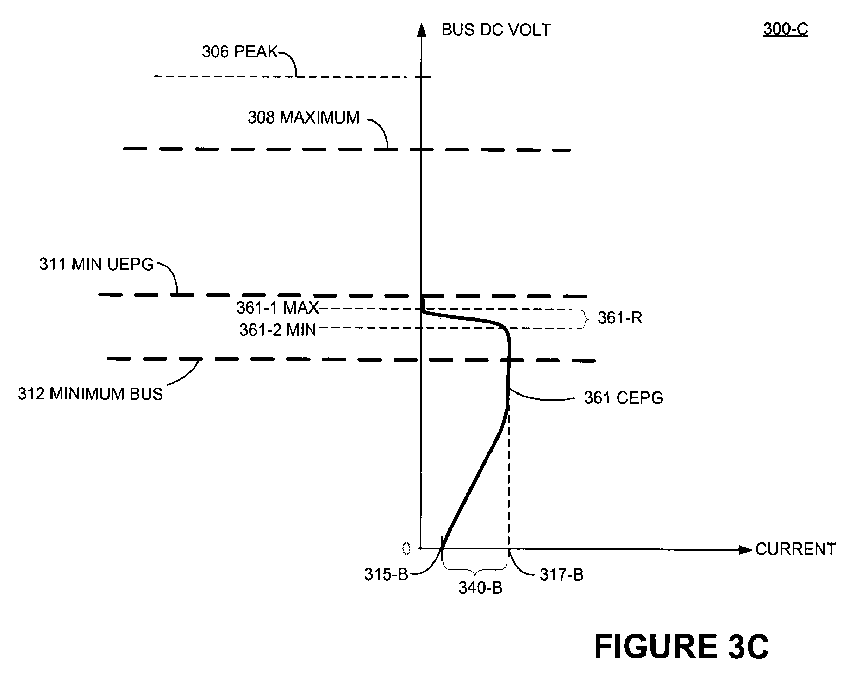

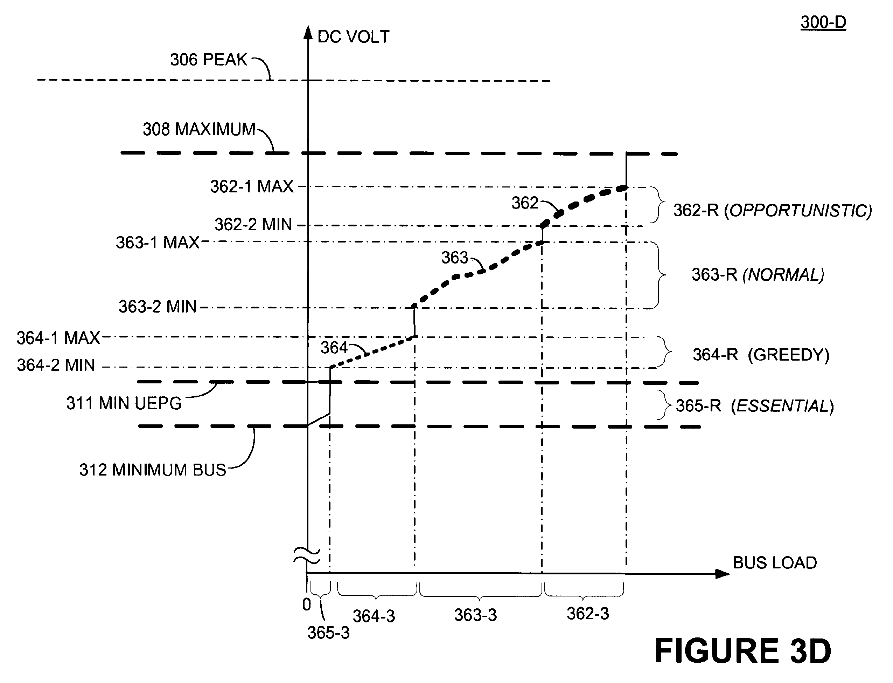

Referring now to **Figure 3C****,** a graph 300-C of a power curve 361 of a controlled-energy power-generator CEPG, having a control voltage range and a foldback limit, is shown according to one or more embodiments. Power curve 361 for CEPG is similar to the general shape of UEPG power curve 360, having both a foldback limit 315-B and a maximum current 317-B. In lieu of the voltage limit of UEPG power curve 360, the present power curve 361 utilizes a control voltage range 361-R varying from a maximum voltage level 361-1, to a minimum voltage level 361-2. The maximum voltage level 361-1, is a threshold or trip voltage, where the CEPG is scaled back to supply a minimum amount of power and eventually turned off to supply no power. The minimum voltage level 361-2 is a voltage level at which a maximum amount of power is produced by CEPG, e.g. maximum current 317-B. The maximum voltage level 361-1 is offset below the minimum uncontrolled power operating voltage level 311 in order to prevent instability from transitioning between a UEPG, e.g., power curve 360 of Figure 3B, above the minimum uncontrolled power operating voltage line 311 and the present CEPG power curve 361 below the minimum uncontrolled power operating voltage line 311. Thus, when UEPG curve 360 of **Figure 3B** and CEPG curve 361 of the **Figure 3C** are implemented together, with devices shown in **Figure 2** a system load curve 301 of **Figure 3A** results in a seamless and transparent transition between the two modes of uncontrolled and controlled power generation, as shown by system load curve 301 in UEPG voltage range 320 and CEPG voltage range 321. In CEPG voltage range 321, the voltage of the bus is determined mostly by the CEPGs and their power capacity within their respective CVRs. In UEPG voltage range 320, the voltage of the bus is determined mostly by varying the quantity and amount of PC loads on the bus, since the power generated by the UEPGs is uncontrollable and results mostly from the whims of nature, e.g., wind and sunshine, as shown in subsequent **Figure 3D****.**

Furthermore, the turn-on rate over the CVR 361-R is gradual to provide damping in the system and to create smooth transitions between activation and deactivation of different PC devices and between turn-off and turn on or self-limiting events of different PG devices, and interactions therebetween. Current from CEPG shown by curve 361 will fold back to point 315-B as bus line voltage is pulled down to zero volts by increasing load, as shown by current range 340-B. Like UEPG curve 360, the specific shape and break points in CEPG power curve 361 can vary widely between different types of controlled-energy power generators, e.g., grid, backup battery, fuel cell, etc. and between different designs, materials, and device characteristics with in a type of controlled energy power generators, so long as above features are satisfied

Referring now to **Figure 3D****,** a graph 300-D of a power-consumption curve illustrating the aggregated loads on the DC bus, and changes thereto, as the bus operating voltage increases or decreases, is shown according to one or more embodiments. Power consumers (PCs) can be divided into groups such as essential, greedy, normal, and opportunistic. Essential PCs are those required for safety purposes, such as lighting or life support equipment, or required for critical purposes such as saving critical data on computing equipment and shutting down the computing equipment in a controlled manner. As such, essential PCs have the lowest control voltage range, e.g., range 365-R, in which the PCs will activate when the bus operating voltage, the ordinate, increases into the range 365-R, with corresponding bus load range 365-3, in which the essential PCs are controlled. All CVRs in the power-consumption curve are monotonic in that the current always increases in any manner, e.g., linear or nonlinear, for an increase in voltage, to avoid instability. Once turned on, the PC will remain activated as the bus operating voltage increases up the power-consumption curve 362, 363, 364, e.g., up to the maximum bus operating voltage 308. The PC will remain activated until the bus operating voltage again enters the control voltage range, wherein the PC will deactivate at the lower end thereof. A span, or offset, between the turn-on, or activation, and the turn-off, or deactivation, voltage levels of the PCs help to prevent instability situations such as an oscillating activation/deactivation cycle.

Next, greedy PCs are those loads that consume the earliest power from the UEPG as available power increases. Thus, greedy PCs have the first CVR 364-R, with a minimum voltage level of 364-2 and a maximum voltage level of 364-1 that is above the minimum uncontrolled power operating voltage 311, which corresponds to current load 364-3. Greedy PCs can be any devices with a next higher priority for a given user, and as such, can have a wide range of potential loads, e.g., a refrigerator, stove, etc. Between CVRs, a current consumption by PCs is essentially constant, as shown by vertical lines, e.g., between the maximum voltage level 364-1 of greedy CVR 364-R and the minimum voltage level 363-2 of normal CVR 363-R.

Above greedy PCs is the normal CVR 363-R with a minimum voltage 363-2 and a maximum voltage 363-1, which range corresponds to current range 363-3. Normal PCs include typical non-critical loads, such as water heater, pumps, and power-consumers that feed the grid, e.g., a grid-tie DC-to-AC inverter PC 220-A shown in Figure 2. The next group of PCs is the opportunistic PC having a CVR 362-R framed by a minimum voltage level of 362-2 and a maximum voltage level of 362-1, and corresponding bus load range 362-3, located just below maximum bus operating voltage 308. Opportunistic loads are those used to capture excess power generation form UEPGs, e.g., when a very active solar panel is producing excess power above normal PC consumption capability. So as to avoid wasting this energy, an energy storage device of some type is typically employed, whether a heat sink, battery, water heater, pumped water into reservoir, cold sink, e.g., ice, for later use when a need arises, etc. While a given system can traverse up and down the power consumption curve of graph 300-D at will, the monotonic relationships over the given CVRs promotes the reliable demand response performance of the PCs.

If cumulative power consumption of all PCs is still insufficient to capture all the power produced by the UEPG, then the operating voltage of the bus eventually reaches the maximum bus operating voltage 308, which will then voltage limit the UEPG, so as to provide a buffer from the peak safe voltage 306, at which the infrastructure is rated, e.g., the housing wiring rating. The given slope of the power consumption curve and the overall rise and run can vary depending upon the performance characteristics of the PCs independently and together in the system.

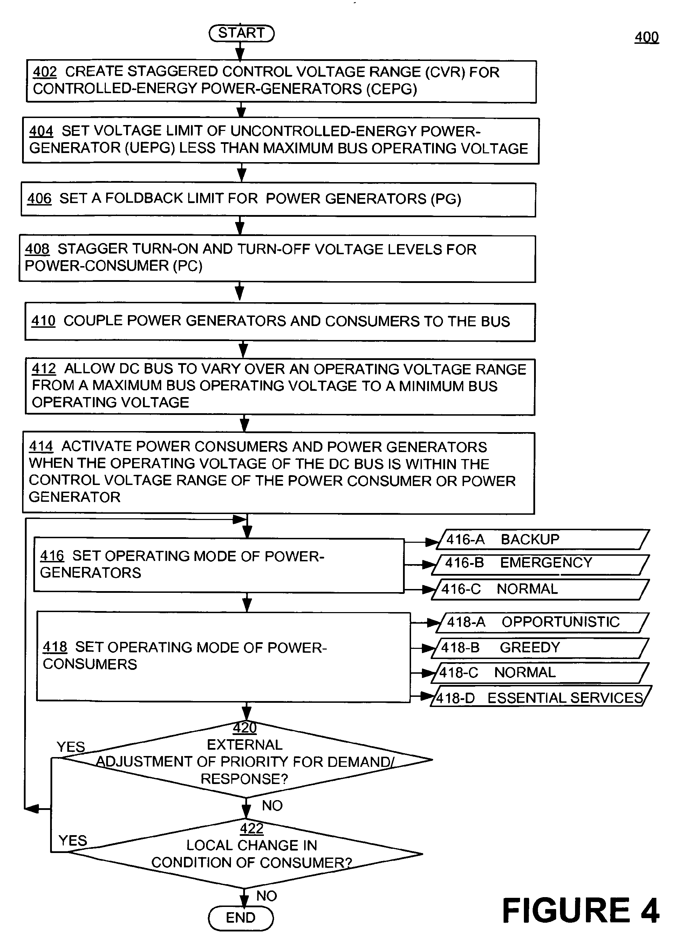

Referring now to **Figure 4****,** a flowchart 400 of the operation of the demand response system, is shown according to one or more embodiments. Flowchart 400 is implemented in the system and components described hereinabove. Operation 402 creates control voltage ranges (CVR) for controlled-energy power-generators ("CEPG"). As described in Figure 3C, with in the control voltage range of a CEPG a maximum power will be produced at a minimum voltage level in order to pull the operating voltage of the DC bus above the minimum bus operating voltage while a minimum amount of power will be produced at a maximum voltage level because the bus operating voltage is further above the minimum bus operating voltage level and closer to the point at which uncontrolled energy power generators, e.g., renewable energy sources, will be contributing power to the DC bus. Optionally, the control voltage ranges of different CEPGs can be staggered to provide gradual turn-on, and load matching for power consumer profiles that can vary over their control voltage ranges.

Operation 404 sets a voltage limit for the uncontrolled power-generator at a value less than the maximum bus operating voltage. The uncontrolled power-generator will continue to create power, if the uncontrolled energy source increases intensity e.g. the sun or wind. Thus, a voltage limit will protect the DC bus to less than maximum bus operating voltage.

Operation 406 provides a foldback limit for power generators. As shown in Figures 3B and 3C, as load on the DC bus increases beyond the power-generators capability to maintain a minimum bus operating voltage, the bus operating voltage can approach zero, at which point, the current output of the controlled or uncontrolled energy power generator continually decreases from the maximum current output level at the higher bus operating voltage level to a foldback limit, a value between zero amps and the maximum current output.

Operation 408 optionally staggers the turn-on and turn-off voltage levels for power consumers. The staggering produces stepped and gradual turn on of devices so as not to overload the system, or cause spikes. The turn on and turn off voltage levels in the control voltage range can be either set by the design of the equipment, or alternatively by user or third party, e.g., smart-grid administrator, to different programmable levels. Operation 410 couples the power generators and consumers to the DC bus. As noted in Figure 2, power consumers and power generators may be added or removed from the system in a modular fashion, as they are all independently controlled and self-regulated, based upon the operating voltage level of the DC bus and their own control voltage regulation levels.

Operation 412 allows the DC bus to vary over an operating voltage range from a maximum bus operating voltage to a minimum bus operating voltage. In other words, DC bus does not require control by a central controller or by individual controllers, or microcontrollers, to seek a given narrow voltage level with very little variation. Instead, the variation of the operating voltage level of the bus is the information used to activate and deactivate power generators and power consumers to provide self-regulated demand response in a robust and decentralized manner. The CVR and associated voltage-controlled circuitry in PGs or PCs can act as a controller function, though it is not a traditional microcontroller per se. In another embodiment, an actual microcontroller can be utilized on one or more PGs or PCs to allow control of the PG or PC and more sophisticated communication with the system and/or other PGs and PCs. This is accomplished in operation 414 that activates power consumers when the operating voltage of the DC bus is within the control voltage range of the power consumer or power generator.

Operation 416 sets the operating mode of power-generators, e.g., whether backup 416-A or emergency 416-B, or for normal operation 416-C, and over what range of voltages. Similarly, operation 418 sets the operating mode of power consumers, with such factors as opportunistic 418-A, greedy 418-B, normal 418-C, and essential 418-D. Any categorization and description can be used depending on the applications needs.

Operation 420 inquires whether external adjustment of priority for demand response is needed, e.g., from a smart-grid administrator or grid power supplier. If external adjustment is necessary, flowchart 400 returns to step 416 of setting the operating mode of the power generators or power-consumers. If no external adjustments are necessary, then flowchart 400 proceeds to operation 422 that inquires whether a local change occurred in the condition of the consumer. If no change occurred, then flowchart 400 ends and the system continues its operation. Any operation of flowchart 400 can be repeated while the system is operated or changed at any frequency during its life cycle.

Referring now to **Figure 5**, a case table 500 of demand/response scenarios performed by the demand response system, is shown according to one or more embodiments. Table 500 presents different types of devices that are divided with power-generators on the top set of rows and power-consumers on the bottom set of rows. Several scenarios provide different circumstances for both the controlled-energy and uncontrolled energy power generator performance, and the resultant power consumer mode. Thus, for example, in a 'renewable energy setting', with solar panel 'on' and rectifier from grid 'off,' the essential components ("E") of only a computer and LED lighting are first powered, and if sufficient power exists, then normal loads of 'fridge' and 'water heater' and 'inverter to grid' are powered. The next scenario is a grid brownout with an 'off' status for the rectifier power-generator from grid, but changes the status of the fridge, water heater to opportunistic ("O") which labels and places them in a lower priority vis-à-vis the 'inverter (to grid)' which needs all the power it can obtain from any source. In tiered rate jurisdictions, supplying power to the grid from local alternative energy, e.g., from UEPG solar panels, at times of the day with critical high-power demands on the grid can translate into premium revenue for the user, manager, or owner of the system. In the last scenario with 'no local generators,' the alternative energy is not available and thus solar panel is 'off,' e.g., a night, leaving the rectifier from grid 'on' as the only power source for the DC bus. Power consumers are the same as the 'renewable mode' with the exception that the grid-tie inverter power consumer is now 'not available' as the only source of power is coming from the grid. Additional programmable versions of demand/response scenarios are available to the user or administrator of the system, to tailor the settings to the specific system, e.g., Option A and B. Additionally, PG and PC devices can have reliable and easy to operate switches on the actual devices, or internal settings accessed remotely via wired or wireless communication, that selectively determine the mode of the device, e.g., a water heater system with a switch having switch settings of E for essential, O for opportunistic, or G for greedy. The user can change the setting depending on their needs, as well as other energy ecosystem variables.

By changing operating scenarios of the system for one or a block of users depending upon these circumstances in the grid and local uncontrolled energy power generator performance, whether locally or by a third-party administrator, be it utility company or energy broker, substantial energy and cost savings may be realized with the present disclosure. A wide range of scenarios, and user preferences priorities, as well as smart grid or utility company inputs are available to determine the categorization, the state, and the priority of the power-consumers using the present system. Table 500 can include values that are statically set by a user or system administrator. In another embodiment, Table 500 can be a dynamic table that automatically changes between columnar scenarios, based on utility grid and/or user needs, e.g., via a smart controller with values and trip points (grid voltage vs. bus voltage) set therein. The dynamically variable CVR for any given PC and/or PG, as described for system 200, can result in a change in the mode of the PC or PG in table 500, e.g., from a greedy to an opportunistic category. The present invention can be intermixed with legacy PC and PG devices, with the newer devices having variable or programmable CVRs being set to compensate for the legacy devices.

Methods and operations described herein can be in different sequences than the exemplary ones described herein, e.g., in a different order. Thus, one or more additional new operations may be inserted within the existing operations or one or more operations may be abbreviated or eliminated, according to a given application, so long as the same function, way and result is obtained.

Other features of the present embodiments will be apparent from the accompanying drawings and from the detailed description that follows. In addition, it will be appreciated that the various operations, processes, and methods disclosed herein may be embodied in a machine-readable medium and/or a machine accessible medium compatible with a data processing system (e.g., a computer system), and may be performed in any order. Accordingly, the present invention is defined by the apppended claims.

## Claims

1. A system (200) for integrating power-generators, the system comprising:
a floating DC bus (101);
one or more power-generators [PGs] (102) coupled to the DC bus;
one or more power-consumers [PCs] (214) coupled to the DC bus;
wherein the system comprises means configured so that the floating DC bus has an operating voltage that is allowed to vary over a range from a minimum bus operating voltage up to a maximum bus operating voltage; and
wherein the system is configured to use a variation in the operating voltage of the DC bus to control an operation of at least one power-generator or at least one power-consumer based on a control voltage range [CVR] of the at least one power-generator or the at least one power-consumer.

2. The system of claim 1 further comprising:
two or more PGs, or two or more PCs, coupled to the DC bus, wherein each of the two or more PGs, or two or more PCs, have staggered control voltage ranges that provide staggered performance of the two or more PGs, or two or more PCs, at different voltage levels on the DC bus in order to provide automatic demand/response performance.

3. The system of claim 1 wherein the one or more power-generators is selected from a group of power generators consisting of: an uncontrolled-energy power-generator, a controlled- energy power-generator, and any combination of an uncontrolled-energy power- generator and a controlled-energy power-generator.

4. The system of claim 3 wherein:
the operating voltage of the floating DC bus has a first operating voltage range within which uncontrolled power-generators contribute power, and a second operating voltage range within which controlled power-generators contribute power; and
wherein the first operating voltage range and the second operating voltage range transition at a common threshold voltage.

5. The system of claim 4 wherein:
the operating voltage of the DC bus can be influenced in the first operating voltage range by selectively changing an amount of load, or a quantity of loads, from PCs on the DC bus; and
the operating voltage of the DC bus can be influenced in the second operating voltage range by selectively changing an amount of power from, or a quantity of, PGs on the DC bus., or wherein:
the quantity and type of PCs and the quantity and type of PGs affecting the bus operating voltage at a given point in time depends upon which PCs and which PGs have a CVR within which the bus operating voltage resides at that given point in time; and
the operating voltage of the DC bus is determined at a given point in time by a cumulative effect of all PCs and all PGs having a CVR within which the bus operating voltage resides at that given point in time.

6. The system of claim 1 further comprising:
an arc fault detection circuit coupled to the DC bus, wherein the arc fault detection circuit shorts the DC bus to neutralize the art, wherein each of the PGs have a current limiter that limits a current supplied to a reasonable level during a DC bus short, or further comprising:
a wireline modulator coupled to the DC bus to provide modulated signals on the DC bus for control or monitoring of the one or more PGs or the one or more PCs.

7. The system of claim 1 wherein a first backup power-generator having a turn-off voltage that is higher than a turn-off voltage of a second backup power-generator is prioritized over the second backup power-generator to start providing current to the DC bus first as the bus operating voltage drops below a minimum uncontrolled energy power generator operating voltage.

8. A system (200) for integrating power-generators, the system comprising:
a floating DC bus (101);
one or more power-generators [PGs] (102) coupled to the DC bus;
one or more power-consumers [PCs] (214) coupled to the DC bus;
wherein system comprises means configured so that the floating DC bus has an operating voltage that may vary within a range from a minimum bus operating voltage up to a maximum bus operating voltage;
the operating voltage of the floating DC bus has a first operating voltage range within which uncontrolled power-generators contribute power, and a second operating voltage range within which controlled power-generators contribute power; and
the first operating voltage range and the second operating voltage range transition at a common threshold voltage.

9. The system of claim 8 wherein:
a variation in the operating voltage of the DC bus controls an operation of at least one power- generator or at least one power-consumer based on a control voltage range [CVR] of the at least one power-generator or the at least one power-consumer;
the quantity and type of PCs and the quantity and type of PGs affecting the bus operating voltage at a given point in time depends upon which PCs and which PGs have a CVR within which the bus operating voltage resides at that given point in time; and
the operating voltage of the DC bus is determined at a given point in time by a cumulative effect of all PCs and all PGs having a CVR within which the bus operating voltage resides at that given point in time.

10. The system of claim 1 or claim 8 wherein:
the PGs and PCs operate autonomously with no central control by the system and no communication between each other beyond the variation of the operating voltage of the DC bus.

11. The system of claim 1 or claim 8 wherein PCs and PGs are modular and may be electrically coupled or decoupled from the system without any change in any control of the system beyond the intrinsic variation of the operating voltage of the DC bus.

12. A method of integrating and managing one or more power-generators on a DC bus, the method comprising:
creating a voltage control range for at least one controlled power-generator including a maximum voltage level in the voltage control range and a minimum voltage level in the voltage control range;
coupling the at least one power-generators to the dc bus;
allowing the dc bus to vary over a bus operating voltage range between a maximum bus operating voltage and a minimum bus operating voltage;
producing a minimum amount of power from the controlled-energy power-generator when the bus operating voltage is at the maximum voltage level of the voltage control range, and producing a maximum amount of power when the bus operating voltage is at the minimum voltage level of the voltage control range.

13. The method of claim 12 further comprising:
creating a turn-on voltage setting for the voltage control range of the at least one controlled- energy power-generator;
allowing the DC bus to vary over an operating voltage range down to a minimum bus operating voltage;
activating the at least one power-generator when the operating voltage of the DC bus reaches the turn-on voltage setting of the at least one power-generator wherein the turn-on voltage setting is at or above the minimum bus operating voltage.

14. The method of claim 12 further comprising:
wherein the one or more power-generators includes an uncontrolled-energy power-generator; and
creating a current- limit, and a foldback limit for the uncontrolled-energy power-generator

15. The method of claim 12 further comprising:
coupling any combination of an uncontrolled-energy power-generator and a controlled- energy power- generator to the DC bus, or:
coupling at least two power-generators to the DC bus; and
staggering a control voltage range for the at least two of the power-generators to allow a staggered activation and deactivation in order to provide automatic demand/response performance.

## Patentansprüche

1. System (200) zum Integrieren von Stromerzeugern, wobei das System umfasst:
eine floatende GS-Sammelschiene (101);
einen oder mehrere Stromerzeuger [PGs] (102), die mit der GS-Schiene gekoppelt sind;
einen oder mehrere Stromverbraucher [PCs] (214), die mit der GS-Schiene gekoppelt sind;
wobei das System Mittel umfasst, die so konfiguriert sind, dass die floatende GS-Sammelschiene eine Betriebsspannung aufweist, die über einen Bereich von einer minimalen Sammelschienen-Betriebsspannung bis zu einer maximalen Sammelschienen-Betriebsspannung variieren kann; und
wobei das System so konfiguriert ist, dass es eine Schwankung der Betriebsspannung der GS-Sammelschiene zum Steuern eines Betriebs mindestens eines Stromerzeugers oder mindestens eines Stromverbrauchers basierend auf einem Steuerspannungsbereich [CVR] des mindestens einen Stromerzeugers oder des mindestens einen Stromverbrauchers verwendet.

2. System nach Anspruch 1, ferner umfassend:
zwei oder mehr PGs oder zwei oder mehr PCs, die mit der GS-Sammelschiene gekoppelt sind, wobei jeder der zwei oder mehr PGs oder der zwei oder mehr PCs gestaffelte Steuerspannungsbereiche aufweist, welche gestaffelte Leistung der zwei oder mehr PGs oder der zwei oder mehr PCs bei verschiedenen Spannungspegeln auf der GS-Sammelschiene bereitstellen, um automatische Nachfrage-/Reaktionsleistung bereitzustellen.

3. System nach Anspruch 1, wobei der eine oder die mehreren Stromerzeuger aus einer Gruppe von Stromerzeugern ausgewählt sind, die aus Folgenden besteht: einem Stromerzeuger ungeregelter Energie, einem Stromerzeuger geregelter Energie und einer beliebigen Kombination eines Stromerzeugers ungeregelter Energie und eines Stromerzeugers geregelter Energie.

4. System nach Anspruch 3, wobei:
die Betriebsspannung der floatenden GS-Sammelschiene einen ersten Betriebsspannungsbereich, innerhalb dessen ungeregelte Stromerzeuger Strom beisteuern, und einen zweiten Betriebsspannungsbereich aufweist, innerhalb dessen geregelte Stromerzeuger Strom beisteuern; und
wobei der erste Betriebsspannungsbereich und der zweite Betriebsspannungsbereich bei einer gemeinsamen Schwellenspannung übergehen.

5. System nach Anspruch 4, wobei:
die Betriebsspannung der GS-Sammelschiene im ersten Betriebsspannungsbereich durch selektives Ändern einer Menge von Last oder einer Größe von Lasten aus PCs auf der GS-Sammelschiene beeinflusst werden kann; und
die Betriebsspannung der GS-Sammelschiene im zweiten Betriebsspannungsbereich durch selektives Ändern einer Menge von Strom oder einer Größe von PGs auf der GS-Sammelschiene beeinflusst werden kann; oder wobei:
die Größe und der Typ von PCs und die Größe und der Typ von PGs, welche die Sammelschienen-Betriebsspannung zu einem bestimmten Zeitpunkt beeinflussen, davon abhängt, welche PCs und welche PGs einen CVR aufweisen, innerhalb dessen sich die Sammelschienen-Betriebsspannung zu diesem bestimmten Zeitpunkt befindet; und
die Betriebsspannung der GS-Sammelschiene zu einem bestimmten Zeitpunkt durch eine kumulative Wirkung aller PCs und aller PGs mit einem CVR, innerhalb dessen sich die Sammelschienen-Betriebsspannung zu diesem bestimmten Zeitpunkt befindet, bestimmt wird.

6. System nach Anspruch 1, ferner umfassend:
eine Fehlerlichtbogen-Detektionsschaltung, die mit der GS-Sammelschiene gekoppelt ist, wobei die Fehlerlichtbogen-Detektionsschaltung die GS-Sammelschiene kurzschließt, um den Lichtbogen zu neutralisieren, wobei jeder der PGs einen Strombegrenzer aufweist, der einen während eines GS-Sammelschienenkurzschlusses zugeführten Strom auf einen angemessenen Pegel begrenzt, oder ferner umfassend:
einen Drahtleitungsmodulator, der mit der GS-Sammelschiene gekoppelt ist, um modulierte Signale auf der GS-Sammelschiene zum Steuern oder Überwachen des einen oder der mehreren PGs oder des einen oder der mehreren PCs bereitzustellen.

7. System nach Anspruch 1, wobei ein erster Reserve-Stromerzeuger mit einer Abschaltspannung, die höher als eine Abschaltspannung eines zweiten Reserve-Stromerzeugers ist, gegenüber dem zweiten Reserve-Stromerzeuger priorisiert wird, um zuerst mit der Bereitstellung von Strom zur GS-Sammelschiene zu beginnen, wenn die Sammelschienen-Betriebsspannung unter eine minimale Betriebsspannung eines Stromerzeugers ungeregelter Energie abfällt.

8. System (200) zum Integrieren von Stromerzeugern, wobei das System umfasst:
eine floatende GS-Sammelschiene (101);
einen oder mehrere Stromerzeuger [PGs] (102), die mit der GS-Schiene gekoppelt sind;
einen oder mehrere Stromverbraucher [PCs] (214), die mit der GS-Schiene gekoppelt sind;
wobei das System Mittel umfasst, die so konfiguriert sind, dass die floatende GS-Sammelschiene eine Betriebsspannung aufweist, die innerhalb eines Bereichs von einer minimalen Sammelschienen-Betriebsspannung bis zu einer maximalen Sammelschienen-Betriebsspannung variieren kann;
die Betriebsspannung der floatenden GS-Sammelschiene einen ersten Betriebsspannungsbereich, innerhalb dessen ungeregelte Stromerzeuger Strom beisteuern, und einen zweiten Betriebsspannungsbereich aufweist, innerhalb dessen geregelte Stromerzeuger Strom beisteuern; und
wobei der erste Betriebsspannungsbereich und der zweite Betriebsspannungsbereich bei einer gemeinsamen Schwellenspannung übergehen.

9. System nach Anspruch 8, wobei:
wobei eine Schwankung der Betriebsspannung der GS-Sammelschiene einen Betrieb mindestens eines Stromerzeugers oder mindestens eines Stromverbrauchers basierend auf einem Steuerspannungsbereich [CVR] des mindestens eines Stromerzeugers oder des mindestens einen Stromverbrauchers steuert;
die Größe und der Typ von PCs und die Größe und der Typ von PGs, welche die Sammelschienen-Betriebsspannung zu einem bestimmten Zeitpunkt beeinflussen, davon abhängt, welche PCs und welche PGs einen CVR aufweisen, innerhalb dessen sich die Sammelschienen-Betriebsspannung zu diesem bestimmten Zeitpunkt befindet; und
die Betriebsspannung der GS-Sammelschiene zu einem bestimmten Zeitpunkt durch eine kumulative Wirkung aller PCs und aller PGs mit einem CVR, innerhalb dessen sich die Sammelschienen-Betriebsspannung zu diesem bestimmten Zeitpunkt befindet, bestimmt wird.

10. System nach Anspruch 1 oder 8, wobei:
die PGs und PCs selbständig ohne zentrale Steuerung durch das System und ohne Kommunikation zwischen einander über die Schwankung der Betriebsspannung der GS-Sammelschiene hinaus funktionieren.

11. System nach Anspruch 1 oder 8, wobei die PCs und PGs modular sind und ohne jegliche Änderung einer Steuerung des Systems über die intrinsische Schwankung der Betriebsspannung der GS-Sammelschiene hinaus elektrisch mit dem System gekoppelt oder davon entkoppelt werden können.

12. Verfahren zur Integration und Verwaltung eines oder mehrerer Stromerzeuger auf einer GS-Sammelschiene, wobei das Verfahren umfasst:
Erstellen eines Spannungssteuerungsbereichs für mindestens einen geregelten Stromerzeuger, der einen maximalen Spannungspegel im Spannungssteuerungsbereich und einen minimalen Spannungspegel im Spannungssteuerungsbereich umfasst;
Koppeln des mindestens einen Stromerzeugers mit der GS-Sammelschiene;
Variierenlassen der GS-Sammelschiene über einen Sammelschienen-Betriebsspannungsbereich zwischen einer maximalen Sammelschienen-Betriebsspannung und einer minimalen Sammelschienen-Betriebsspannung;
Erzeugen einer minimalen Menge von Strom vom Stromerzeuger geregelter Energie, wenn die Sammelschienen-Betriebsspannung auf dem maximalen Spannungspegel des Spanungssteuerungsbereichs ist, und Erzeugen einer maximalen Menge von Strom, wenn die Sammelschienen-Betriebsspannung auf dem minimalen Spannungspegel des Spannungssteuerungsbereichs ist.

13. Verfahren nach Anspruch 12, ferner umfassend:
Erstellen einer Einschaltspannungseinstellung für den Spannungssteuerungsbereich des mindestens einen Stromerzeugers geregelter Energie;
Variierenlassen der GS-Sammelschiene über einen Betriebsspannungsbereich bis zu einer minimalen Sammelschienen-Betriebsspannung hinab;
Aktivieren des mindestens einen Stromerzeugers, wenn die Betriebsspannung der GS-Sammelschiene die Einschaltspannungseinstellung des mindestens einen Stromerzeugers erreicht, wobei die Einschaltspannungseinstellung bei oder über der minimalen Sammelschienen-Betriebsspannung ist.

14. Verfahren nach Anspruch 12, ferner umfassend:
wobei der eine oder die mehreren Stromerzeuger einen Stromerzeuger ungeregelter Energie umfassen; und
Erstellen einer Stromgrenze und einer Rücklaufgrenze für den Stromerzeuger ungeregelter Energie.

15. Verfahren nach Anspruch 12, ferner umfassend:
Koppeln einer beliebigen Kombination eines Stromerzeugers ungeregelter Energie und eines Stromerzeugers geregelter Energie mit der GS-Sammelschiene, oder:
Koppeln mindestens zweier Stromerzeuger mit der GS-Sammelschiene; und
Staffeln eines Steuerspannungsbereichs für die mindestens zwei der Stromerzeuger, um eine gestaffelte Aktivierung und Deaktivierung zu ermöglichen, um automatische Nachfrage-/Reaktionsleistung bereitzustellen.

## Revendications

1. Système (200) pour intégrer des générateurs d'énergie électrique, ce système comprenant :
un bus c.c. flottant (101) ;
un ou plusieurs générateurs d'énergie électrique (GE) (102) couplés au bus c.c. ;
un ou plusieurs consommateurs d'énergie (CE) (214) couplés au bus c.c. ;
ce système comprenant un moyen configuré de façon à ce que le bus c.c. flottant ait une tension de fonctionnement qui est autorisée à varier sur une plage allant d'une tension de fonctionnement de bus minimum à une tension de fonctionnement de bus maximum ; et
ce système étant configuré de façon à utiliser une variation de la tension de fonctionnement du bus c.c. pour commander un actionnement d'au moins un générateur d'énergie électrique en se basant sur une plage de tensions de commande (PTC) de l'au moins un générateur d'énergie électrique ou de l'au moins un consommateur d'énergie.

2. Système selon la revendication 1, comprenant en outre :
deux GE ou plus, ou deux CE ou plus, couplés au bus c.c., chacun des deux GE ou plus, ou des deux CE ou plus, ayant des plages de tensions de commande décalées qui fournissent un fonctionnement décalé des deux GE ou plus, ou des deux CE ou plus, à différents niveaux de tension sur le bus c.c. de façon à fournir un fonctionnement de demande/réponse automatique.

3. Système selon la revendication 1, dans lequel le ou les générateurs d'énergie électrique sont sélectionnés parmi un groupe de générateurs d'énergie électrique consistant en : un générateur d'énergie électrique à énergie non contrôlée, un générateur d'énergie électrique à énergie contrôlée, et n'importe quelle combinaison d'un générateur d'énergie électrique à énergie non contrôlée et d'un générateur d'énergie électrique à énergie contrôlée.

4. Système selon la revendication 3, dans lequel :
la tension de fonctionnement du bus c.c. flottant a une première plage de tensions de fonctionnement dans les limites de laquelle des générateurs d'énergie électrique à énergie non contrôlée contribuent de l'énergie, et une deuxième plage de tensions de fonctionnement dans les limites de laquelle des générateurs d'énergie électrique à énergie contrôlée contribuent de l'énergie ; et
dans lequel la première plage de tensions de fonctionnement et la deuxième plage de tensions de fonctionnement passent de l'une à l'autre à une tension de seuil commune.

5. Système selon la revendication 4, dans lequel :
la tension de fonctionnement du bus c.c. peut être influencée dans la première plage de tensions de fonctionnement en changeant sélectivement une grandeur de charge, ou une quantité de charges, provenant des CE sur le bus c.c. ; et
la tension de fonctionnement du bus c.c. peut être influencée dans la deuxième plage de tensions de fonctionnement en changeant sélectivement une quantité d'énergie provenant des GE, ou une quantité de GE, sur le bus c.c., ou dans lequel :
la quantité et le type de CE et la quantité et le type de GE affectant la tension de fonctionnement du bus à un moment donné dans le temps dépend de quels CE et de quels GE ont une PTC dans les limites de laquelle réside la tension de fonctionnement du bus à ce moment donné dans le temps ; et
la tension de fonctionnement du bus c.c. est déterminée à un moment donné dans le temps par un effet cumulatif de tous les CE et de tous les GE ayant une PTC dans les limites de laquelle réside la tension de fonctionnement du bus à ce moment donné dans le temps.

6. Système selon la revendication 1, comprenant en outre :
un circuit de détection d'arc de court-circuit couplé au bus c.c., ce circuit de détection d'arc de court-circuit court-circuitant le bus c.c. de façon à neutraliser l'arc, chacun des GE ayant un limiteur de courant qui limite un courant alimenté à un niveau raisonnable pendant un court-circuit du bus c.c., ou comprenant en outre :
un modulateur à conducteur électrique couplé au bus c.c. de façon à fournir des signaux modulés sur le bus c.c. pour la commande ou la surveillance du ou des GE ou du ou des CE.

7. Système selon la revendication 1, dans lequel un premier générateur d'énergie électrique de secours ayant une tension d'arrêt qui est plus haute qu'une tension d'arrêt d'un deuxième générateur d'énergie électrique de secours se voit donner la priorité sur le deuxième générateur d'énergie électrique de secours pour commencer à fournir du courant au bus c.c. en premier alors que la tension de fonctionnement du bus tombe en dessous d'une tension de fonctionnement minimum de générateur d'énergie électrique à énergie non contrôlée.

8. Système (200) intégrant des générateurs d'énergie électrique, ce système comprenant :
un bus c.c. flottant (101) ;
un ou plusieurs générateurs d'énergie électrique (GE) (102) couplés au bus c.c. ;
un ou plusieurs consommateurs d'énergie (CE) (214) couplés au bus c.c. ;
ce système comprenant un moyen configuré de façon à ce que le bus c.c. flottant ait une tension de fonctionnement qui puisse varier dans les limites d'une plage allant d'une tension de fonctionnement de bus minimum à une tension de fonctionnement de bus maximum ;
la tension de fonctionnement du bus c.c. flottant ayant une première plage de tensions de fonctionnement dans les limites de laquelle des générateurs d'énergie électrique à énergie non contrôlée contribuent de l'énergie, et une deuxième plage de tensions de fonctionnement dans les limites de laquelle des générateurs d'énergie électrique à énergie contrôlée contribuent de l'énergie ; et
la première plage de tensions de fonctionnement et la deuxième plage de tensions de fonctionnement passant de l'une à l'autre à une tension seuil commune.

9. Système selon la revendication 8, dans lequel :
une variation de la tension de fonctionnement du bus c.c. commande un actionnement d'au moins un générateur d'énergie électrique ou d'au moins un consommateur d'énergie en se basant sur une plage de tensions de commande (PTC) de l'au moins un générateur d'énergie électrique ou de l'au moins un consommateur d'énergie ;
la quantité et le type de CE et la quantité et le type de GE affectant la tension de fonctionnement du bus à un moment donné dans le temps dépend de quels CE et de quels GE ont une PTC dans les limites de laquelle réside la tension de fonctionnement du bus à ce moment donné dans le temps ; et
la tension de fonctionnement du bus c.c. est déterminée à un moment donné dans le temps par un effet cumulatif de tous les CE et de tous les GE ayant une PTC dans les limites de laquelle réside la tension de fonctionnement du bus à ce moment donné dans le temps.

10. Système selon la revendication 1 ou la revendication 8, dans lequel :
les GE et les CE fonctionnent de façon autonome sans commande centrale par le système et sans communication entre l'un et l'autre au-delà de la variation de la tension de fonctionnement du bus c.c.

11. Système selon la revendication 1 ou la revendication 8, dans lequel les CE et les GE sont modulaires et peuvent être couplés ou découplés électriquement du système sans aucun changement d'aucune commande du système au-delà de la variation intrinsèque de la tension de fonctionnement du bus c.c.

12. Procédé d'intégration et de gestion d'un ou de plusieurs générateurs d'énergie électrique sur un bus c.c., ce procédé comprenant :
la création d'une plage de commande de tension pour au moins un générateur d'énergie électrique à énergie contrôlée comprenant un niveau de tension maximum dans la plage de commande de tension et un niveau de tension minimum dans la plage de commande de tension ;
le couplage de l'au moins un générateur d'énergie électrique au bus c.c. ;
l'autorisation de la variation de la tension du bus c.c. sur une plage de tensions de fonctionnement entre une tension de fonctionnement de bus maximum et une tension de fonctionnement de bus minimum ;
la production d'une quantité minimum d'énergie à partir du générateur d'énergie électrique à énergie contrôlée lorsque la tension de fonctionnement du bus est au niveau de tension maximum de la plage de commande de tension, et la production d'une quantité maximum d'énergie lorsque la tension de fonctionnement du bus est au niveau de tension minimum de la plage de commande de tension.

13. Procédé selon la revendication 12, comprenant en outre :
la création d'un réglage de tension de mise en marche pour la plage de commande de tension de l'au poins un générateur d'énergie électrique à énergie contrôlée ;
l'autorisation de la variation de la tension du bus c.c. sur une plage de tensions de fonctionnement dont la limite inférieure va jusqu'à une tension de fonctionnement de bus minimum ;
l'activation de l'au moins un générateur d'énergie électrique lorsque la tension de fonctionnement du bus c.c. atteint le réglage de tension de mise en marche de l'au moins un générateur d'énergie électrique, le réglage de tension de mise en marche étant égal à ou au-dessus de la tension de fonctionnement minimum du bus.

14. Procédé selon la revendication 12, comprenant en outre :
dans lequel le ou les générateurs d'énergie électrique comprennent un générateur d'énergie électrique à énergie non contrôlée ; et
la création d'une limite de courant, et d'une limite de repli pour le générateur d'énergie électrique à énergie non contrôlée.

15. Procédé selon la revendication 12, comprenant en outre :
le couplage de n'importe quelle combinaison d'un générateur d'énergie électrique à énergie non contrôlée et d'un générateur d'énergie électrique à énergie contrôlée au bus c.c., ou :
le couplage d'au moins deux générateurs d'énergie électrique au bus c.c. ; et
le décalage d'une plage de tensions de commande pour les au moins deux des générateurs d'énergie électrique de façon à permettre une activation et une désactivation décalées afin de fournir un fonctionnement de demande/réponse automatique.
